(19) Europäisches Patentamt
European Patent Office
Office européen des brevets

(11) EP 3 702 126 A1

(12) EUROPEAN PATENT APPLICATION

(43) Date of publication:
02.09.2020 Bulletin 2020/36

(51) Int Cl.:
$B29C\ 48/05^{(2019.01)}$    $B29C\ 48/12^{(2019.01)}$
$B29C\ 64/106^{(2017.01)}$    $B29C\ 64/209^{(2017.01)}$
$B33Y\ 10/00^{(2015.01)}$    $B29C\ 48/25^{(2019.01)}$
$B29C\ 48/02^{(2019.01)}$

(21) Application number: 19159938.0

(22) Date of filing: 28.02.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Technische Universität Dresden
01069 Dresden (DE)

(72) Inventors:
• MINEV, Ivan
01307 Dresden (DE)

• AFANASENKAU, Dzmitry
01445 Radebeul (DE)
• PAK, Anna
13355 Berlin (DE)
• ATHANASIADIS, Markos
01097 Dresden (DE)

(74) Representative: Hertin und Partner
Rechts- und Patentanwälte PartG mbB
Kurfürstendamm 54/55
10707 Berlin (DE)

(54) **METHOD FOR PRODUCING AN ELASTIC AND FLEXIBLE FIBER WITH OPTICAL, ELECTRICAL OR MICROFLUIDIC FUNCTIONALITY**

(57) The invention therefore relates to a method for manufacturing an elastic and flexible fiber with a pre-determined non-circular cross-sectional geometry, the method comprising extrusion of an elastomer from a nozzle onto a substrate, wherein the pre-determined non-circular cross-sectional geometry of the fiber is determined by the height and velocity of the nozzle relative to the substrate. The invention relates to methods for producing preferably biocompatible microfluidic, electrically-conducting and light-guiding fibers using the methods of the invention. The invention further relates to elastic and flexible fibers produced by the method, such as fibers with an elliptical cross-sectional geometry, fibers with a flattened cylinder (ribbon) form or an elongated indentation along a length of the fiber (groove) and corresponding uses.

**Fig. 1**

a

## Description

The invention relates to the field of mesoscale printing of elastic and flexible fibers using Direct Ink Writing (DIW).

The invention therefore relates to a method for manufacturing an elastic and flexible fiber with a pre-determined non-circular cross-sectional geometry, the method comprising extrusion of an elastomer from a nozzle onto a substrate, wherein the pre-determined non-circular cross-sectional geometry of the fiber is determined by the height and velocity of the nozzle relative to the substrate. The invention relates to methods for producing preferably biocompatible microfluidic, electrically-conducting and light-guiding fibers using the methods of the invention. The invention further relates to elastic and flexible fibers produced by the method, such as fibers with an elliptical cross-sectional geometry, fibers with a flattened cylinder (ribbon) form or an elongated indentation along a length of the fiber (groove) and corresponding uses.

## BACKGROUND OF THE INVENTION

Three-dimensional printing allows one to design and rapidly fabricate materials in complex shapes without the need for expensive tooling, dies, or lithographic masks. A growing palette of printable materials, coupled with the ability to control mesoscale architecture via printing software, has opened new avenues for creating designer materials with tailored uses at high levels of performance. New methods for patterning materials at the mesoscale are needed to drive scientific and technological advances in multiple areas, including lightweight structures, antennas, batteries, displays, interconnects, microfluidics, optics and photonics.

One example of a such a method of 3D printing is Direct Ink Writing (DIW), a simple, yet highly versatile additive fabrication technology. In a typical process, a viscoelastic material is extruded through a nozzle. The material, also referred to as ink, is laid down as a continuous filament by the translational motion of a robot (printing head) creating structures in two or three dimensions. A large number of materials has been employed in DIW. They often exhibit pronounced shear thinning behavior and can include colloidal suspensions, hydrogels, polymer precursors or melts [1]. DIW is well suited for handling biomimetic materials such as elastomers and hydrogels, which is desirable for building bioinspired or biointegrated architectures [2] [3]. Recently, inks with electrical functionality have made DIW an emerging technology for embedding electrical circuits in mechanically conformable, dynamic and stretchable substrates [4] [5]. This can enable soft robots [6], artificial sensing skins [7], organ-on-chip platforms [8] and bioelectronic implants [9]. Biological systems however are not just electrical machines. Devices engineered to emulate or interface them, should possess multi-modal functionalities [10] [11]. DIW is a promising technique for the creation of bioinspired systems comprising of sensors and actuators with electrical, optical, microfluidic, thermal and mechanical functionalities [12] [13].

Plastic electronic wraps have been described in the art, such as flexible and stretchable metallic and transparent organic conductors with near-bulk-metal electrical resistivities. Such electronic foil technology offers new avenues for the design of complex, stretchable, electronic devices [27]. However, novel and improved approaches are required for generating electrical circuits using tailored, meso- or microscale approaches. DIW represents on promising option. Methods known as hybrid 3D printing have been described for producing soft electronics. Some methods combine DIW with automated pick-and-place of surface mount electronic components within a single manufacturing platform [28].

The resolution of the printing process is determined by the size of the extruded filament, which is typically circular in cross section, with a diameter related to the nozzle's inner diameter. Strategies for controlling the cross-sectional geometry of extruded filaments such as custom nozzles with non-circular geometry are seldom explored but could be a valuable approach to enhance the resolution and versatility of DIW [14]. Another interesting approach for enhancing print resolution beyond the nozzle size limitation was recently proposed by Yuk and Zhao who showed that a reduction of filament diameter could be achieved by stretching the filament during printing [15].

WO 2017/137945 discloses a thermal drawing method for forming fibers, wherein said fibers are made at least from a stretchable polymer. The method relies on a preform made of glass or polymer that is rigid at room temperature, being fed into an enclosed furnace and heated over its glass transition temperature. As the viscosity decreases the preform necks down under its own weight; when the lower end of the preform comes out of the furnace, it is attached to a pulling system, and the fiber is then continuously drawn. Elastomers have been employed to produce fibers, but no guidance is presented on obtaining non-circular cross-sectional geometries.

Despite these advances, novel approaches are required in order to improve the range of products produced by DIW. In particular, methods have not been described in the art for utilizing existing DIW devices with standard nozzles of circular cross-section to develop fibers of non-circular cross-sectional geometries.

## SUMMARY OF THE INVENTION

In light of the prior art, the technical problem underlying the present invention is to provide alternative and/or improved means for producing elastic and flexible fibers at meso- or sub-millimeter scales. One object of the invention is to provide improved or alternative means for producing fibers at this scale with non-circular geometries. Another object of the invention is to provide fibers at this scale with non-circular geometries using standard DIW techniques, such as using devices with circular nozzles.

The present invention seeks to provide such means while avoiding the disadvantages known in the prior art.

The problem is solved by the features of the independent claims. Preferred embodiments of the present invention are provided by the dependent claims.

The invention therefore relates to a method for manufacturing an elastic and flexible fiber with a pre-determined non-circular cross-sectional geometry, the method comprising extrusion of an elastomer from a nozzle onto a substrate, wherein the pre-determined non-circular cross-sectional geometry of the fiber is determined by the height and velocity of the nozzle relative to the substrate.

The inventors have shown that simple circular nozzles can be used to print filaments with ellipse, ribbon, groove and even microchannel cross sections by harnessing deformation in the ink during printing. Producing these non-standard filaments is achieved through control of printing parameters including nozzle height and speed relative to the substrate. Using this approach, the inventors have established means for directly writing elastic electrical interconnects, optical fibers and microfluidic channels. Their integration in soft systems for multi modal sensors and actuators is also described herein.

The present invention allows the use of a standard nozzle of essentially circular cross-sectional geometry, as is often present in a DIW or 3D printing device, to be used to produce a fiber of a non-circular cross-sectional geometry by programming the corresponding printing device to position the nozzle appropriately with respect to its height from a substrate and determine the velocity of printer head (nozzle) movement.

In standard DIW operations, filaments have close to circular cross sections. Stable printing is achieved by setting the translational speed of the print head to be close to the extrusion speed, with which ink leaves the nozzle. At the same time, the height of the nozzle above the substrate is kept relatively high, often similar to or greater than the inner diameter of the nozzle. For conventional DIW with circular cross-section filaments, the translational speed of the nozzle relative to the substrate the same as or faster than the extrusion speed, with which the elastomer leaves the nozzle.

The inventors have however found that when the translational speed of the nozzle relative to the substrate is slower than the extrusion speed, with which the elastomer leaves the nozzle, and/or when the distance between the nozzle and the substrate is less than the inner diameter of the nozzle, non-circular cross section filaments are produced.

In one embodiment, the method is therefore characterized in that:

a. the translational speed of the nozzle relative to the substrate is slower than the extrusion speed, with which the elastomer leaves the nozzle, and/or

b. the distance between the nozzle and the substrate is less than the inner diameter of the nozzle.

By manipulating the height and velocity of the nozzle relative to a substrate, novel non-circular cross-sectional geometries can be obtained. In preferred embodiments, these relate to elliptical cylinders, ribbons or flattened cylinders, grooved cylinders or discontinuous fibers.

In one embodiment, the fiber has an elliptical cross-sectional geometry or is a flattened cylinder (ribbon), preferably wherein the ratio of width to height of the cross-sectional geometry of the fiber is 1.5 or more, preferably 2 or more.

In one embodiment, the fiber comprises an elongated indentation along a length of the fiber (groove).

Until the present time, methods of DIW at this scale have not been described in which the height and velocity of the nozzle relative to the substrate are modified or set up specifically to control a non-circular cross-sectional geometry of the resulting fiber. In some embodiments, the method comprises calibrating a DIW device by assessing multiple nozzle speeds and/or heights, in order to adjust or define the specific cross-sectional geometry required.

The adjustment of these factors in the context of DIW at this scale represents a novel approach, not previously suggested in the art. Elastic and flexible fibers with specific predetermined non-circular cross-sectional geometries can therefore be produced in single extrusion runs, without necessarily requiring multiple steps in their manufacture.

In one embodiment, the nozzle is essentially circular in cross-section. In some embodiments, the printing nozzle is cylindrical (i.e. a needle) or conical (i.e. a tapered needle).

Typical approaches of the prior art employ circular nozzles to continually produce a filament from a height above a substrate, such that the substrate surface does not "interfere" or modify the typically circular cross-sectional geometry of the fiber produced. Typically, either the height of the nozzle is sufficiently great that a fiber with circular cross-sectional geometry is manufactured, or a non-circular nozzle is employed to produce fibers of non-circular cross-sectional geometry. Nozzle exchange methods are disadvantageous, as nozzle changes create an extra variable and technical complication before the method can be carried out.

In one embodiment, the elastomer is extruded onto the substrate as a continuous filament by a (preferably automated) translational relative motion of the nozzle relative to the substrate, followed by a hardening of the elastomer after extrusion to produce an elastic fiber.

According to the present invention, "hardening" refers to any change in the elastomer, such that the material exhibits a greater hardness and greater viscosity than upon extrusion. Upon extrusion the material must be fluid and extrudable, in order to be displaced from the nozzle of the printing device. Post-extrusion the material "hardens" or "sets" into a particular form, i.e. its viscosity and hardness will increase to provide a stable fiber form that maintains elastic and flexible properties due to the properties of the material employed.

In some embodiments, hardening refers preferably to cooling, i.e. in the case of thermoplastic elastomers, thereby increasing viscosity and hardness of the material post-extrusion. In other embodiments, the material may harden by polymerization, for example where a chemical reaction leads to increased hardness and viscosity. In other embodiments, the elastomer may be considered to "set" to a particular form, whereby the elastomer achieves a "final" form, or shape, post-extrusion, i.e. a final form maintained by the fiber when no external force is placed upon the fiber. The fiber will however retain its elastic and flexible properties. Hardening is not intended to refer to a change in material properties such that the material is of such hardness that it is no longer elastic or flexible. Upon application of external force, such as bending and/or stretching, the fiber may deform according to the elastic and flexible properties of the material, and preferably return to its original form upon removal of any displacement force.

In some embodiments, the cross-sectional geometry of the fiber is essentially not significantly altered due to an external force of e.g. bending or stretching, i.e. the fiber may be stretched, bent, curled, wrapped, curved and/or twisted without fundamental changes in cross-sectional geometry. As demonstrated in the examples below, the fibers of the present invention are characterized by surprisingly good maintenance of light guiding and electronical conducting properties upon mechanical stress, such as bending or stretching, when applied to the fibers.

According to the invention, the elastomer is an extrudable elastomer, allowing the elastomer to flow through the nozzle when pressure is applied and to "harden" into an elastic and flexible form after the elastomer is deposited on the substrate.

In one embodiment, the elastomer has a shear rate dependent viscosity.

In one embodiment, the elastomer is a thermoplastic elastomer.

In one embodiment, the elastomer selected from the group consisting of silicone rubber (such as polydimethylsiloxane), a (preferably biocompatible) viscoelastic polymer, polyurethane or polyurethane rubber, a hydrogel (such as based on gelatin, agarose, alginate, methylcellulose) or microgel (such as based on polyacrylic acid), colloidal suspension (such as containing silicate particles), a polymer precursor and/or a melt (such as wax). Composites or mixtures based on one or more of the above are also contemplated.

Preferred embodiments relate to printable silicone elastomers, preferably of the polydimethylsiloxane family (e.g. SE1700 Dow Corning), microgel based on cross linked polyacrylic acid, such as Carbopol (Lubrizol [17]), both of which exhibit shear rate dependent viscosity, allowing the ink to flow through the nozzle when pressure is applied and to "set" in the shape of a filament after the ink has exited the nozzle.

Further preferred embodiments relate to biocompatible viscous polydimethylsiloxane (PDMS) ink, biocompatible rigid thermoplastic polymers such as polylactic acid (PLA) or acrylonitrile butadiene styrene (ABS), as used in [8].

In one embodiment, the fiber has a maximum cross-sectional width of 10-2000 $\mu$m, preferably wherein the fiber has a maximum cross-sectional width of 50-1500 $\mu$m, more preferably about 300-1000 $\mu$m. In other embodiments, the fiber has a cross-sectional maximum width of up to 5000 $\mu$m.

In one embodiment, the nozzle has a smallest internal diameter of 10-500 $\mu$m, preferably 100-300 $\mu$m, more preferably about 150-250 $\mu$m.

In one embodiment, the nozzle has a smallest outer diameter, greater than the internal diameter, of 20-1000 $\mu$m, preferably 100-700 $\mu$m, more preferably about 300-500 $\mu$m.

The nozzles employed in the present invention are intended to be those established in 3D printing and DIW devices of an appropriate scale.

Nozzle sizes (including both internal and external diameter) can be selected and/or adjusted in order to determine the particular dimensions of the fiber, as is described herein in more detail below. The nozzle height, but also internal and external diameters, are very important in determining the non-circular cross-section geometry. For example, using a small external diameter of the nozzle will lead typically to a smaller groove, when producing fibers with an elongated indentation along their length.

The substrate of the present invention is, in some embodiments, preferably any inert material upon which the nozzle can extrude the elastomer. In other embodiments, the substrate may however also be a part of a device, such as an implantable device, soft robot, sensor, microfilm, or other part of an application device as described in more detail below. In some embodiments, the fiber may be removed from the substrate after extrusion. In other embodiments, the fiber may remain stably, reversibly or irreversibly attached to the substrate upon which it is deposited.

In some embodiments, the precise determination of non-circular cross-sectional geometry can be achieved using the following parameters:

determining the velocity of the nozzle relative to the substrate comprises setting the velocity V of the nozzle according to Equation 1:

$$V = \frac{v}{c}$$

wherein $v$ is the translational speed of the nozzle relative to the substrate and $c$ is the extrusion speed, with which the elastomer leaves the nozzle, and/or

wherein determining the height of the nozzle relative to the substrate comprises setting the height $H$ of the nozzle according to Equation 2:

$$H = \frac{h}{\alpha\, din}$$

wherein $h$ is a distance between the nozzle and the substrate, $din$ is an inner diameter of the nozzle and $\alpha$ is 1 or a die-swelling factor that determines a post-extrusion expansion of the ink,

wherein:

when both $V$ and $H$ are more than about 1, the fiber has an essentially circular cross-sectional geometry, and when $V$ and/or $H$ are about 1 or less, the fiber has a non-circular cross-sectional geometry,
wherein the elliptical or flattened cylinder (ribbon) form is obtained by setting $V$ and $H$ according to Equation 3:

$$V < \frac{1}{H^2}$$

or wherein the elongated indentation along a length of the fiber (groove) is obtained by setting $V$ and $H$ according to Equation 4:

$$V < \frac{\pi}{4}\, \frac{din}{dout}\, \frac{1}{H}$$

wherein $din$ is an inner diameter of the nozzle, $dout$ is an outer diameter of the nozzle.

By employing the methods above, specific non-circular cross-sectional geometries of the fibers can be obtained with excellent accuracy and precision. Variation in each of the variables provided above is possible to produce a pre-determined cross-sectional geometry. As is described in more detail in the examples below, the transition between ellipses and ribbons, and between ribbons and grooved fibers has been determined for two specific elastomer materials. This procedure is also possible for additional materials, such that for any given elastomer, precise determination of the cross-sectional geometry can be achieved prior to printing.
The above descriptions relate primarily to "single" fibers, or fibers producible by a single pass of the printing nozzle over the substrate. It is greatly advantageous to be able to define specific non-circular cross-sectional geometries using only modification of nozzle height and velocity (in some embodiments alone), in order to achieve a specific form of a fiber. Multiple passes of the printing device are unnecessary. As such, the present method is defined by improved efficiency, accuracy, enhanced simplicity and therefore more economical and reliable manufacturing advantages. Until now, additional method steps were required for printing fibers on this scale, before they could be functionalized for any given particular use. On the contrary, the method as described herein enables, for the first time, fibers to be produced with a circular (standard) nozzle, whilst achieving predetermined non-circular geometries via single pass of the printing nozzle.
Further aspects of the invention are described below, in which multiple passes of the nozzle are required, in order to produce more complicated fiber forms and greater functionality, for example as microfluidic conduits, as electrically-conducting interconnects, or as optical cables/fibers.
The more complicated structures described below require multiple passes of the nozzle, or multiple extrusion runs, but still rely on the accurate and reliable methods above for "single" fiber structures. A number of the structures described in detail below therefore also benefit from the advantageous "single" fiber structures above but expand on this technology for specific applications.
In one embodiment, the nozzle, or object of essentially the same dimensions as a nozzle, is passed over the fiber after the elastomer is deposited on the substrate, and preferably before significant elastomer hardening, thereby removing elastomer (e.g. by engraving and/or suctioning) and producing an elongated indentation along a length of the fiber (groove).
This method can be applied to a fiber of noncircular cross-sectional geometry as described above, or to a fiber of essentially circular cross-sectional geometry.
This method enables a fiber from an initial pass of the nozzle to be further modified by a second pass of the nozzle. The nozzle height is specifically adjusted in order to remove elastomer in the shape of a groove. This second pass must not, but is preferably, conducted before the elastomer has "set" to its "final" shape. By carrying out the second path before final hardening of the polymer, the elastomer is easier to modify, as it is not yet set. The nozzle may therefore rely on a similar programming parameter for the second pass, however the nozzle may be adjusted in height and no extrusion may take place. The velocity will also be set according to the material properties in order to remove an appropriate amount of elastomer, or to engrave a specific depth, thereby forming a tailor-made groove, optionally for positioning a further functional material, as is described below.

In one embodiment, the elongated indentation subsequently closes at the outer edge of the cross-sectional geometry of the fiber to form an elongated (microfluidic) lumen inside the fiber.

This typically occurs when the groove engraved by the nozzle (or similar device) is deeper than the inner diameter of the nozzle. When the groove is relatively deep, and depending on the particular material properties of the elastomer employed, the walls of the groove tend to "fall" in towards each other, and meet, thereby sealing the groove to form a microfluidic lumen. A skilled person is capable of adjusting the elastomer and the depth of the groove in order to determine the closing of the groove.

In one embodiment, the fiber comprises an elongated indentation along a length of the fiber (groove), and an elastic, and preferably flexible, electrically conductive material is positioned in the elongated indentation, followed by sealing said elongated indentation by depositing additional elastomer onto the fiber, preferably using the method of any one of the preceding claims, thereby sealing said electrically conductive material inside the fiber.

The invention therefore relates to electrically conducting fibers and the use of these fibers as electrical interconnects.

The electrically conductive material can, in some embodiments, be a conductive micro- or nanoparticle or microsphere, such as platinum microparticles, stainless steel microspheres, metal nanowires (silver, platinum, gold, nickel), metal coated Microspheres (such as glass or synthetic microspheres), conductive ink and/or metal rubbers. Composites or mixtures based on one or more of the above are also contemplated.

In some embodiments, conductive microspheres are employed. Conductive microspheres are typically manufactured by applying a metal coating on hollow or solid microspheres, such as glass microspheres. Electrically conductive microspheres are often used as a conductive filler that is lighter than solid silver in paints, adhesives and composites to provide electrical conductivity. Conductive metal-coated microspheres are preferred due to the combined benefit of precise dimensions and electrically-conductive properties.

In some embodiments, eutectic alloys of metals such as gallium and indium, which exist as thick liquids that still permit conductivity, are employed as the conductive material. Ionically conductive liquid electrolytes, such as ionic liquids (1-alkyl-3-methylimidazolium), are also contemplated in some embodiments.

In some embodiments, conductive elastomers may be employed. Electrically conductive and flexible elastomers have been developed and can be printed into the groove of the fiber described herein. For example, conductive rubbers may be employed. Conductive rubber is a broad term for conductive plastic polymers with metallic or carbon-based particles integrated therein.

In some embodiments, conductive ink is employed as the conductive material. Conductive inks are well known to a skilled person and typically involve incorporating graphite, gold, silver or other metal into a printable ink mixture. Conductive ink may be printed into the groove of the fiber using a similar printing process as for the production of the fiber. According to the invention, the conductive inks retain flexibility and elasticity after printing and finishing of the fiber.

In one embodiment, the fiber comprises an elongated indentation along a length of the fiber (groove) and an elastic, and preferably flexible, light guiding material is positioned in the elongated indentation, followed by sealing said elongated indentation by depositing additional elastomer onto the fiber, preferably using the method of any one of the preceding claims, thereby sealing said light guiding material inside the fiber.

The invention therefore relates to light-guiding fibers and the use of these fibers as optical fibers. Optical fibers typically include a core surrounded by a transparent cladding material with a lower index of refraction. Light is kept in the core by the phenomenon of total internal reflection which causes the fiber to act as a waveguide. Selecting materials for the extruded elastic fiber (cladding) and the core (light guiding material) does not require undue effort from a skilled person. The phenomenon of total internal reflection is established, and a skilled person is capable of selecting and/or assessing suitable materials.

The light-guiding material is in some embodiments any material that exhibits a sufficient difference in the index of refraction to the extruded cladding material of the fiber, preferably the light guiding material has a higher index of refraction than the cladding (extruded fiber).

In some embodiments, the light guiding material may be a silicone material, glass, plastic, or other material capable of transmitting light. In some embodiments, the core material can also be a hydrogel as described above (such as based on gelatin, agarose, alginate, methylcellulose).

In a further aspect, the invention relates to an elastic fiber with a non-circular cross-sectional geometry produced using the method as described herein.

In a further aspect, the invention relates to an elastic and flexible extruded fiber with a non-circular cross-sectional geometry and a maximum cross-sectional width of 10-2000 $\mu$m, (or up to 5000$\mu$m) preferably produced using the method of any one of the preceding claims, wherein the fiber comprises:

a. a base element comprising an elongated indentation along a length of the base element (groove), wherein the base element is preferably obtained by extruding an elastomer from a nozzle onto a substrate thereby forming an elongated indentation, and/or optional subsequent engraving of the extruded base element to form an elongated indentation,

and

    b. at least one sealing element bound to the base element, wherein the sealing element is preferably obtained by extruding an elastomer from a nozzle onto the base element, wherein the sealing element is positioned to form a sealed elongated lumen along a length of the fiber between the elongated indentation of the base element and the sealing element, wherein the lumen optionally comprises an elastic and flexible electrically conductive material or an elastic and flexible light guiding material.

The fibers of the invention are distinguishable from those of the prior art based on their structure alone, in addition to properties and features of the fibers obtained inherently through the method of manufacture described herein.

The manufacture of a base element, by extruding an elastomer from a nozzle onto a substrate thereby forming an elongated indentation, and/or optional subsequent engraving of the extruded base element to form an elongated indentation, relates preferably to those methods described above.

In some embodiments, the base element may be defined by a single extruded body of elastomer. Examination of a fiber by its cross-section can reveal if the base element was extruded in a single pass or if multiple elements have been bonded or subsequently joined. In preferred embodiments, the base element is produced in a single pass, in other words, a single extrusion procedure leading to a base element comprising one body of material without subsequent addition of parts.

In other embodiments, if a second pass of the nozzle is required, this is typically carried out in order to engrave a groove from the first fiber, as is described herein. The remaining base element however also relates to a single body of extruded elastomer. Examination of the cross-section of such a fiber enables structural definition of the fiber based on the method of extrusion disclosed herein.

In some embodiments, the sealing element may be a fiber as produced for the base element.

In some embodiments, the sealing element is a further base element. The fiber described herein may therefore comprise of 1, 2, 3, 4 or 5, or more fibers, combined together, as described herein.

The invention therefore comprises, without limitation, the fiber structures shown in Figure 16.

As demonstrated therein, base elements with cross-sectional geometries of elliptical, ribbon or grooved shapes may be obtained. In some embodiments, the underside of the fiber may be flattened due to contacting the substrate upon extrusion. The elliptical shape may therefore be elliptical on the upper side of the fiber, when assessing its cross-sectional geometry, relative to the substrate position upon extrusion. The elongated indentation, groove, may be obtained either by a single pass of the extrusion nozzle, or by a subsequent second pass of the nozzle, thereby engraving a groove form the elliptical, circular or ribbon-shaped base element.

The sealing element may be extruded onto the base element in order to close the groove in the base element, thereby forming a sealed lumen. This lumen may in some embodiments comprise light guiding or electrically conducting material, depending on the application intended.

In some embodiments, the sealing element may be of similar height and width compared to the base element in order to provide an effective seal. In other embodiments, the sealing element may be substantially smaller than the base element, in further embodiments lying for example within the groove in order to provide an overall lower height of the cross-sectional geometry of the fiber when compared to larger sealing elements placed across the groove including flanking areas of the upper edge of the base element.

The fiber of the present invention is therefore defined by a unique multi-element structure produced by 2 or more extruding runs leading to one or more enclosed spaces with in the fiber, thereby allowing multiple functionalities.

The sealing element is in some embodiments irreversibly attached to the base element. In some embodiments, the sealing element is reversibly attached. Depending on the stage of elastomer hardening after extrusion of the sealing element, the sealing element may bond, fuse or adhere to the base element, thereby providing a stable attachment, in the context of the uses described herein. Via an analysis of a fiber cross section, a skilled person can determine the presence of a base element and a sealing element in the resulting fiber. For example, in some embodiments, an edge or line may be evident between the sealing element and base element, running along a seam between the sealing and base element. In some embodiments, no seam is evident. In some embodiments, when assessing the cross-section, the sealing element may transition smoothly into the base element, or the sealing element may be clearly distinct and positioned upon the base element, with a clear transition between sealing and base elements. The structures are obtained by the methods of extruding disclosed herein and are inherent structural features produced by the method of manufacturing applied.

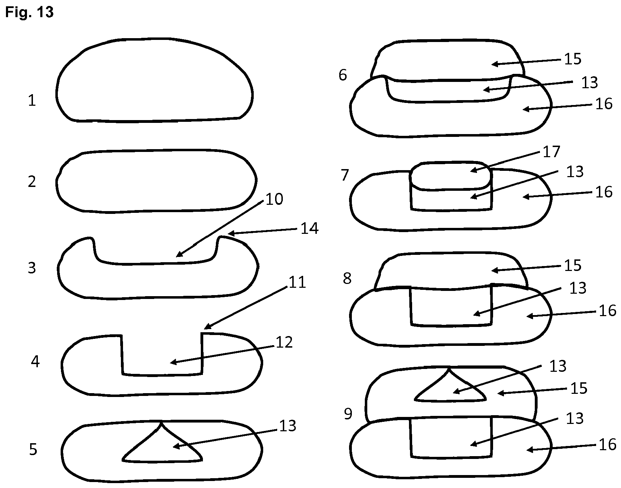

The differentiation between a groove produced by a single nozzle pass and a groove produced by engraving a groove from an extruded fiber/base element is possible based on the sharpness of the corner between the groove and upper edge of the fiber cross section. Typically, engravement with a nozzle or similar object typically results in a sharp corner between the exterior upper surface of the fiber and the engraved groove (item 11, Figure 13). Extruding a fiber (base element) in a single extrusion pass of the nozzle typically leads to a slightly rounded edge transitioning between the groove and upper edge of the fiber cross-section (item 14, Figure 13).

In a further aspect, the invention relates to the use of the elastic fiber as described herein, as:

- an optical fiber, when a light guiding material is sealed inside the fiber,
- a microfluidic channel, when an elongated (microfluidic) lumen is present inside the fiber,
- a pneumatic actuator, when an elongated lumen is present inside the fiber, and pressure can be applied in the lumen, or
- a thermal exchange device, when an elongated lumen present inside the fiber is used to circulate a fluid with temperature different from that of the surroundings,
- an electrical interconnect, when an electrically conductive material is present inside the fiber
- A resistive strain sensor, when an electrically conductive material is present inside the fiber.

In some embodiments, the fiber of the present invention is manufactured from a biocompatible material. According to the present invention, "biocompatible" refers to any natural or synthetic substance, combination of substances or material, which may be employed for any length of time within a biological system, such as a mammalian body. The fibers of the present invention may therefore be used to treat, augment, measure, modulate or replace any tissue, organ or function of a body. Typically, such a biocompatible material does not lead to significant immune response or other detrimental or pathological response by the body to said material.

Due to the selection of elastomer, and biocompatibility, the fibers described herein may be employed in any biological system in a permanent or semi-permanent fashion, for example as part of a prosthetic sensing skin, a wearable device integrated on a fabric, an implant, or organ replacement, or part of an implanted diagnostic or sensor device.

The fibers may be present in larger 3D printed objects. In some embodiments, such objects may be biocompatible and intended for placement on the skin, integrated in a garment or implanted to the body.

The fibers may be employed as a wearable elastomer-based electronic skin, as described in [29], including for example resistive sensors for monitoring finger articulation, and capacitive tactile pressure sensors that register distributed pressure along the length of the finger.

In some embodiments, the fiber is employed in a stretchable "electronic skin" designed to be worn over a body part, e.g. the hand, that can monitor live finger movement. Such a sensory skin is typically thin and made entirely of elastic materials, and can be mounted on a glove and worn without impeding hand movement. Accordingly, the elastic fiber described herein is excellently suited for such an application.

In other embodiments, the fibers may be employed as organs-on-chips, such as Instrumented cardiac microphysiological devices, as described in [8].

In some embodiments, the fiber is employed in 3D printed and instrumented microphysiological device that provides continuous electronic readout of the contractile stress of multiple laminar cardiac micro-tissues. Typically, each device contains three key features: multilayer cantilevers, composed of a base layer, an embedded strain sensor, and a tissue-guiding layer and electrical interconnects for readout. The fibers described herein are therefore with respect to their size, elasticity and electrical conductivity excellent for application such as this, in particular as electrical interconnects.

The invention therefore enables biocompatible soft materials to be used that enable integration of soft strain gauge sensors within micro-architectures. The fibers may be embedded in sensors to provide non-invasive, electronic readouts of tissue contractile stresses inside cell incubators or even from *in vivo* environments. Devices comprising the fibers described herein may be employed in sensors to study drug responses, as well as the contractile development of human cardiac tissues.

In other embodiments, the fibers described herein can be employed in soft robotics applications, as described in [30]. Soft robotics is a nascent field that aims to provide safer, more robust robots that interact with humans and adapt to natural environments better than do their rigid counterparts.

Unlike conventional robots composed of rigid materials, soft robots are typically based on hydrogels, electroactive polymers, granular media and/or elastomers, and exhibit elastic moduli ranging from 10 kPa to 1 GPa and are physically resilient and have the ability to passively adapt to their environment. In some embodiments, molded and laminated elastomers with embedded pneumatic fibers are used. Actuation of these elastomeric composites occurs when connected pneumatic fibers are inflated with incompressible fluids or gases supplied via tethered pressure sources. The fibers described herein are therefore excellently suited for fluidic connections, pressure actuators and electronic interconnects.

In some embodiments, the fiber may be employed as a strain sensor, for example as a patch applied to an area of interest, in order to determine the degree of strain or movement any given area, for example upon a biological organ.

The features disclosed herein with respect to the method apply also to the fiber, and vice versa. The features regarding the cross-sectional geometries, dimensions, or other features, may be used to define the fibers described herein.

## DETAILED DESCRIPTION OF THE INVENTION

All cited documents of the patent and non-patent literature are hereby incorporated by reference in their entirety. All terms are to be given their ordinary technical meaning, unless otherwise described herein.

The present invention is based on innovative approaches towards fiber extrusion using mesoscale 3D printing devices. Direct Ink Writing (DIW) is an additive fabrication technology that allows the integration of a diverse range of functional materials into soft and bioinspired devices such as robots and human-machine interfaces. Typically, a viscoelastic ink is extruded from a nozzle as a continuous filament of circular cross section. The present invention relates to methods in which through a selection of printing parameters such as nozzle height and speed, filaments can be produced with a range of non-circular cross-sectional geometries. Thus, the invention enables the production of printed elliptic cylinder, ribbon or groove shaped filaments or fibers. By using the nozzle as a stylus for post-print filament modification, even filaments with an embedded microfluidic channel can be produced. The inventors apply this strategy to directly write freeform and elastic optical fibers, electrical interconnects and microfluidics. The inventors demonstrate the integration of these components into simple sensor-actuator systems. Prototypes of an optical fiber with steerable tip and a thermal actuation system for soft tissues are also presented.

The present invention therefore relates preferably to meso-, submillimeter- or microscale printing. Mesoscale manufacturing is typically understood as the process of creating components and products in a range of approximately from 0.1mm to 5mm with high accuracy and precision. Meso-manufacturing processes are typically understood as a range of processes between macro- and micromanufacturing processes. Mesoscale manufacturing does overlap with both micro and macro-scale manufacturing. The present invention therefore relates preferably to fibers of micro, meso or macroscale, preferably mesoscale, or sub-millimeter scale fibers. Microscale fibers typically refer to those of 100 nm to 100 $\mu$m in width. Macroscale fibers typically refer to those of greater than 500 $\mu$m in width.

According to the present invention, the term "elastic" refers to the property of the fiber or material to resume its original shape spontaneously after a force has been applied, i.e. after being stretched or compressed.

In some embodiments, the fibers of the present invention exhibit up to 100%, preferably at least 50%, more preferably at least 30%, 20%, or at least 10% linear elasticity without breaking or loss of function, and preferably returning to their original form. In some embodiments, the fibers exhibit elastic moduli in the range of 2 to 5 MPa, preferably 2.28 to 3.00 MPa, which is consistent with the behavior of the constituent silicone elastomers used in the examples. Variations on these values are possible due to the selection of materials employed.

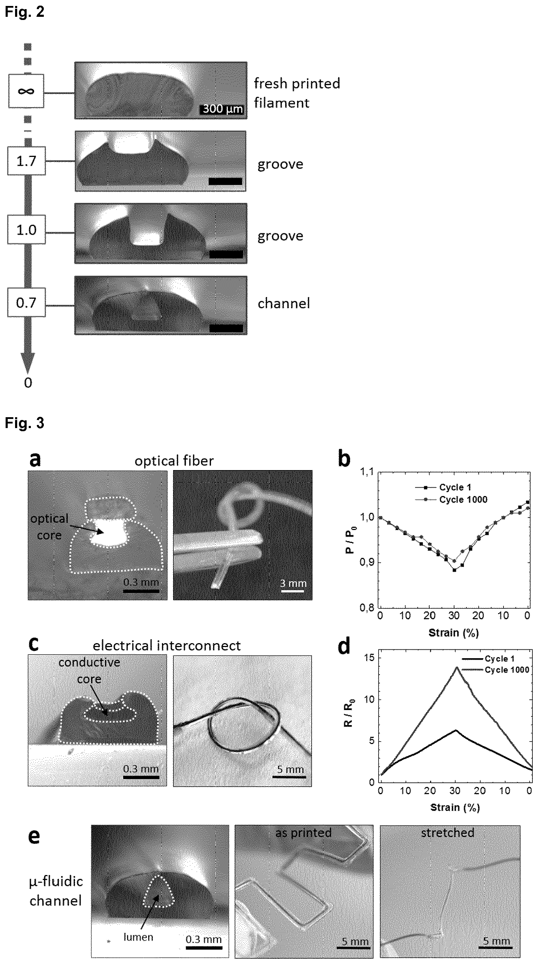

According to the present invention, the term "flexible" refers to the property of the fiber or material described herein to bend, curve and/or twist without breaking. The flexibility of the fibers described herein is evidenced in e.g. Figure 3, and in some embodiments enables corners, knotting or tying, as demonstrated below.

According to the present invention, "hardening" refers to any change in the elastomer, such that the material exhibits a greater hardness and greater viscosity than previously. According to the present invention, the term "hardness" refers to a measure of the resistance to localized plastic deformation induced by mechanical indentation. Indentation hardness measures the resistance of a sample to material deformation due to a constant compression load from an object. According to the present invention, the term "viscosity" of a fluid relates to a measure of its resistance to gradual deformation by shear stress or tensile stress. Viscosity is essentially a quantification of the frictional force that arises between two adjacent layers of fluid that are in relative motion.

According to the present invention, the term "elastomer" refers to any material with viscoelasticity (i.e., both viscosity and elasticity). Such materials typically have weak intermolecular forces, and generally low Young's modulus and high failure strain compared with other materials. Elastomers are commonly amorphous polymers maintained above their glass transition temperature, so that considerable molecular reconformation, without breaking of covalent bonds, is feasible. At ambient temperatures, such elastomers are typically thus relatively soft and deformable. An elastomer relates further to a material that is fluid at temperatures above room temperature, i.e. an elastomer includes compounds that require melting before extrusion. In some embodiments, the elastomers are thermosets. In some embodiments, the elastomers are thermoplastic.

A thermoplast, or thermosoftening plastic, is considered a synthetic material (preferably plastic polymer) that becomes extrudable at a certain elevated temperature and solidifies (hardens) upon cooling. As disclosed herein, hardening relates to any "setting" of a material to a more stable, more viscous form, preferably "set" or "stable" form but that remains elastic and flexible.

The methods of extrusion and devices employed are known to a skilled person in the field of DIW. Methods for producing materials at the mesoscale, which lies between the molecular and macroscopic length scales, are also known to a skilled person. The term "three-dimensional (3D) printing" describes additive manufacturing methods that employ a computer-controlled printer head and/or translation stage, which moves a pattern-generating device in the form of one or more deposition nozzle(s) to fabricate materials according to a predetermine (pre-programmed) form.

Direct Ink Writing (DIW) is an additive fabrication technology. In a typical process, a viscoelastic material is extruded through a nozzle. The material, also referred to as ink, is laid down as a continuous filament or fiber by the translational motion of a robot (printing head) creating structures in two or three dimensions. Filamentary printing methods, as used herein, are established in the art and typically employ a viscoelastic ink that is deposited as a continuous fi lament, potentially in a layer-wise build sequence. In some embodiments, fused-deposition modeling is employed, where thermoplastic filaments are fed through a hot extrusion head, printed, and solidified as they cool below their glass transition temperature. Recently, direct-writing of viscoelastic inks under ambient conditions has been established.

The automated translational motion of the printing head and nozzle and corresponding software can be employed by a skilled person as is necessary. For example, common software approaches employ G-code, a programming language for 3D printers. G-code is a numerical control programming language and stands for "Geometric Code" and provides the user with straightforward functions to instruct a machine head comprising a printer head, such as comprising a nozzle, to move geometrically in 3 dimensions. G-code also enables commands to extrude material at a specified extrusion rate or change the extrusion and/or bed temperature.

In a further aspect, the invention relates to a software or computer executable code for carrying out the method described herein. In a further aspect, the invention relates to a 3D printing device comprising a nozzle, a substrate and instructions, preferably in the form of computer executable code, for adjusting the printing device according to the method described herein.

**FIGURES**

The invention is further described by the following figures. There are intended to represent a more detailed illustration of a number of preferred non-limiting embodiments or aspects of the invention without limiting the scope of the invention described herein.

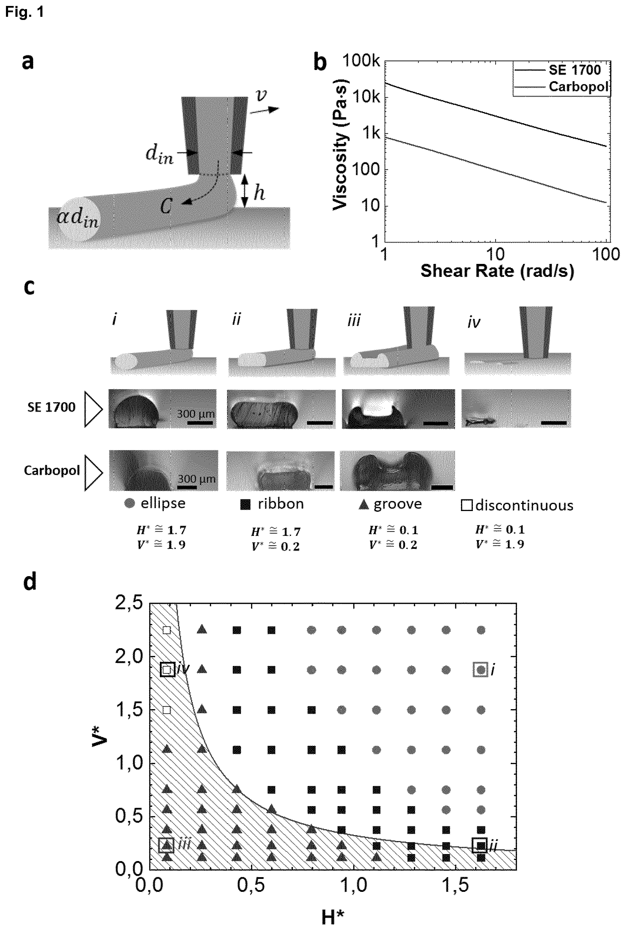

**Figure 1:** Nozzle speed and height control filament geometry. (a) Schematic illustration of a typical DIW set-up. Key parameters that influence the extruded filament are the nozzle's inner diameter $d_{in}$, its height above the substrate $h$, and its translational speed. (b) As determined by oscillating plate rheometry, the two model inks SE1700 and Carbopol investigated here exhibit shear rate dependent viscosity. (c) Catalogue of filament cross sections produced by varying the speed and height of the print nozzle. Bottom row: optical micrographs of filaments printed with SE 1700 and with Carbopol. Filaments can be classified as ellipse (i), ribbon (ii), groove (iii) and discontinuous (iv). (d) Phase diagram of transitions between the cross-section geometries obtained with the SE1700 material. Data points in square boxes indicate the parameters used to produce the examples in (c). Filaments are identified as ribbon when the ratio between the width and height of cross sections is larger than 2. The shaded area indicates the parameter space for which Equation (1) predicts groove filaments.

**Figure 2:** Post-extrusion modification of filament cross sections. Optical micrographs depicting the use of the printing nozzle as a stylus. Depending on the height of the stylus above the substrate, cross-sectional geometries including grooves and channels can be produced with the SE1700 silicone.

**Figure 3:** Direct writing of functional elastic fibers. (a) Micrographs of an optical fiber produced by combining filaments with groove and ribbon cross sections. The optical core is formed by a high refractive index silicone. The optical fiber is coupled to a white light source. (b) Representative optical fiber subjected to tensile strain. The attenuation ratio $P/P_0$, is the ratio between transmitted power during stretch and at rest as measured at the fiber's free end. (c) Micrographs of an electrical interconnect fiber. Here the groove is filled with platinum powder with average particle size of approximately 1 $\mu$m. (d) Representative interconnect under tensile strain. Here $R/R_0$ is the ratio between the interconnect resistance at stretch and at rest. (e) Micrographs of freeform microfluidics. As demonstrated by the infusion of a blue food dye, the channel lumen remains patent even at sharp turns of the fiber.

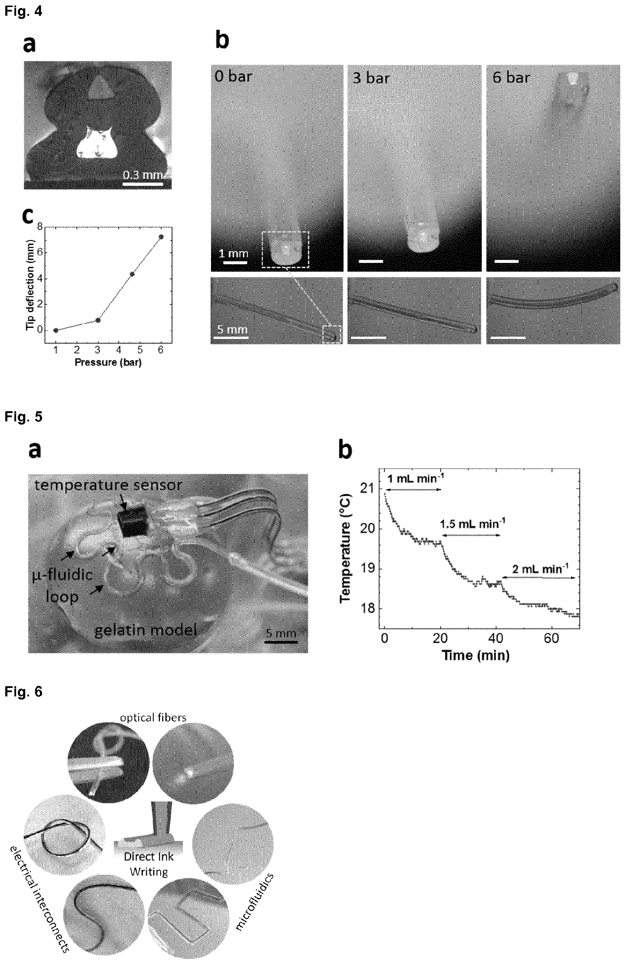

**Figure 4:** Integration of multi-modal fibers by DIW. (a) Cross section of a pneumatically actuated optical fiber illustrating the off-axis position of the microfluidic channel. (b) Front (upper panels) and side (bottom panels) views of the actuator at rest and during the application of compressed air. (c) Quantification of tip deflection as a function of applied air pressure.

**Figure 5:** Demonstration of thermal actuation and sensing using printed fibers and a packaged sensor. (a) A flower-shaped microchannel loop circulates thermal exchange liquid (ethanol). In the middle of the loop is a digital temperature sensor which is linked to printed electrical interconnects by conductive epoxy (Epo-Tek H27D). The sensor-actuator system conforms to the surface of a dome-shaped gelatin model of brain tissue. (b) Thermal response of the model brain tissue to the circulation of chilled ethanol.

**Figure 6:** Schematic overview of various fields of application of the fibers described herein.

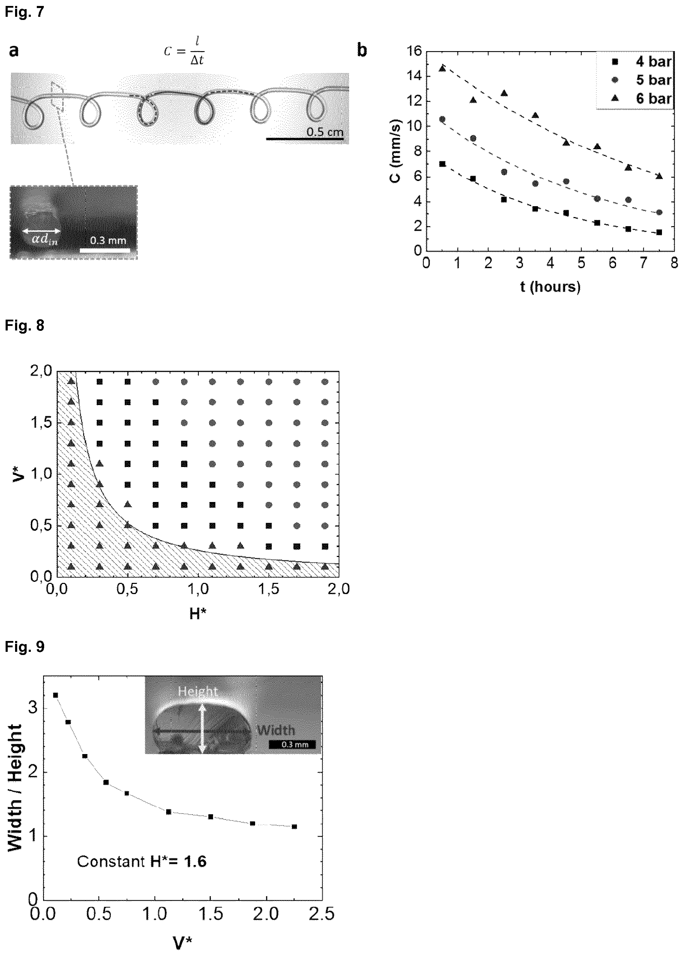

**Figure 7:** Determining die-swelling factor and extrusion speed for SE1700 silicone. (a) Use of the dimensionless height and speed requires direct measurement of two parameters, $C$ (ink extrusion speed) and a (die-swelling factor), which are specific to the ink, printing nozzle and applied pneumatic pressure. First, we print a section of filament in the stable coiling regime (upper panel) which ensures the filament is not stretched by the translational motion of the nozzle. The extrusion speed $C$ is calculated by dividing the total length of the printed filament *l*, by the amount of time that the nozzle was extruding material *Δt*. The air pressure in the nozzle is set at 5 bar, which is maintained in subsequent experiments. The die-swelling factor *α*, is calculated by dividing the cross-section diameter of the filament by the inner diameter of the nozzle $d_{in}$. Using a nozzle with inner diameter of 210 μm, we obtain a value for the die-swelling factor of 1.19. (b) For inks with a "pot-life" the extrusion speed *C* can change as a function of polymerization time. We quantify this for the printable silicone elastomer SE1700 (Dow Corning) over an 8-hour period. For extended printing runs, changes in extrusion speed should be taken into account when calculating the dimensionless parameter *V\**.

**Figure 8:** Phase diagram obtained with Carbopol hydrogel. The transitions between the cross-section geometries for the Carbopol (at 1.2 bar) ink closely follow those observed for SE1700. Filaments are identified as ribbon when the ratio between the width and height of cross sections is larger than 2. The shaded area indicates the parameter space for which Equation (1) predicts groove filaments.

**Figure 9:** Transitions between ribbon, ellipse and circular cross sections. At a constant nozzle height H\*, the cross-sectional geometry of the printed filament can be tuned by varying the nozzle speed V\*. The transition from ribbon to ellipse to circular cross-sections is gradual. We assign the ribbon geometry for cross sections preferably where width/height >2. Ellipses have 1 < width/height < 2 and circular cross sections are characterized by width/height = 1.

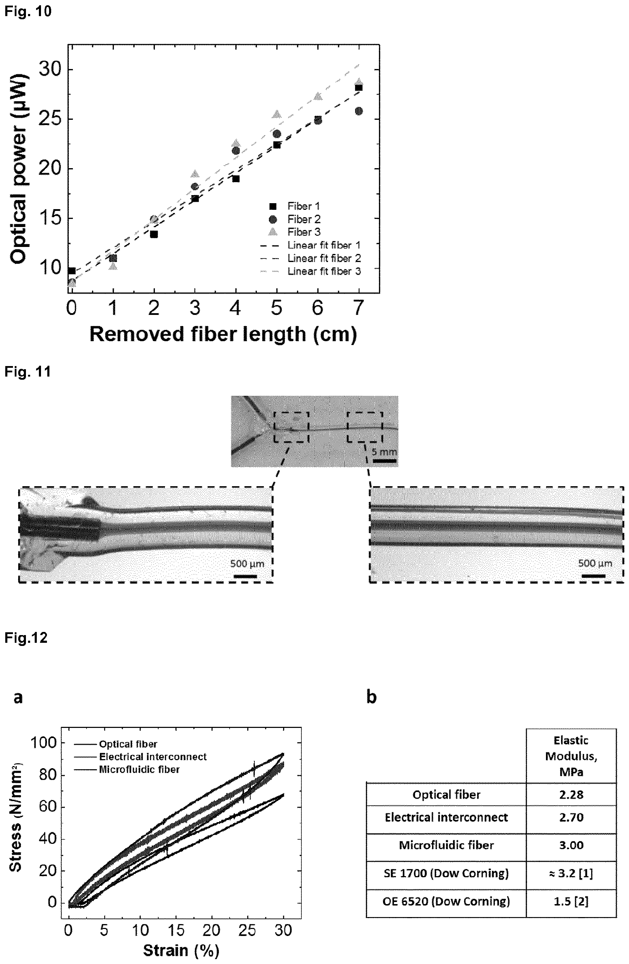

**Figure 10:** White light attenuation in printed optical fibers. To calculate the attenuation in optical fibers, we use the cut-back method. The length of the fiber is reduced in steps. The optical power detected at the free end of the fiber is measured at each step. Attenuation in the fiber is thus calculated according to $10\log_{10}(P/P_0) / \Delta l$ in units of dB/cm.

**Figure 11:** Laminar flow inside printed channels. To investigate how fluid flows inside printed channels, we inject two solutions of food dye of different colors at one end of a channel at a flow rate of 0.1 ml/min for each solution. In optical micrographs, we observe that the two colors do not mix as they flow. This demonstration of laminar flow is taken as an indication of good flow homogeneity inside SE1700 silicone printed channels.

**Figure 12:** Mechanical properties of functional fibers. (a) Up to at least 30% tensile strain, printed fibers exhibit close to linear elastic response. Stress-strain curves are obtained at elongation rate of 0.1 mms$^{-1}$. (b) Elastic moduli of the three types of fiber (extracted from (a)) compared to the values for the silicones they are made from.

**Figure 13:** Schematic overview of a selection of preferred cross-sectional geometries of the fibers of the invention. **Schematic 1** shows an elliptical shape. In some embodiments, a "lower" or bottom surface of the fiber is flattened due to the flat surface of the substrate employed. Depending on substrate shape, the surface may also form other shapes. The elliptical shape is therefore primarily elliptical in the upper region opposed from the substrate. **Schematic 2** shows a ribbon or flattened cylinder shape. **Schematic 3** shows an elongated indentation (groove) 10 in the fibers produced in a single pass of the nozzle by reducing nozzle height and/or reducing nozzle velocity. **Schematic 4** shows an elongated indentation (groove) in the fibers produced by a second pass of the nozzle, thereby engraving an elongated indentation (groove) or engraved channel 12. Of note, due to "engraving", the second pass of the nozzle typically results in an indentation with a sharper corner to the upper edge of the groove (also referred to as an "apex") 11. This sharp or sharper corner or apex is typically sharper than the rounded edge 14 of the groove produced by a single pass of the nozzle, as shown in in 3. **Schematic 5** shows an elongated indentation (groove) in the fibers produced by a second pass of the nozzle, whereby the groove has closed to form a lumen 13 or microfluidic channel, whereby the apexes formed by the engravement have "fallen" together to form a sealed lumen. **Schematic 6** shows a fiber with an elongated indentation (groove) 10 produced in a single pass of the nozzle, which is considered here a base element 16 and additionally a sealing element 15 extruded over the groove, thereby sealing the groove to form a lumen 13. **Schematic 7** shows a fiber with an elongated indentation (groove) produced in a second pass of the nozzle by engraving, which is considered here a base element 16 and additionally a smaller sealing element 17 extruded over the groove, thereby sealing the groove to form a lumen 13. By producing a deeper groove using engraving a smaller sealing element, fitting essentially within an upper region of the groove, can be applied leading to a generally thinner fiber with respect to total height. **Schematic 8** shows a fiber with an elongated indentation (groove) produced in a second pass of the nozzle by engraving, which is considered here a base element 16 and additionally a sealing element 15 extruded over the groove, thereby sealing the groove to form a lumen 13. **Schematic 9** shows a fiber with an elongated indentation (groove) produced in a second pass of the nozzle by engraving, which is considered here a base element 16 and additionally a sealing element 15 extruded over the groove, thereby sealing the groove to form a lumen 13. In this case, the sealing element 15 also comprises a lumen. Fibers of this structure can be produced by a first pass of the nozzle to produce an initial fiber or base element 16, a second pass of the nozzle to produce a groove in the base element 16, a third pass to extrude a sealing element 15 over the groove of the base element 16, and a fourth pass of the nozzle in order to produce a groove in the sealing element 15, thereby forming two lumens 13.

**EXAMPLES**

The invention is further described by the following examples. These are intended to present support for the workability of a number of preferred non-limiting embodiments or aspects of the invention without limiting the scope of the invention described herein.

Example 1: Height and velocity determination:

In standard DIW operations, filaments have close to circular cross sections with diameter $\alpha d_{in}$. Here $d_{in}$ is the inner diameter of the nozzle and $\alpha$ is the die-swelling factor, which describes the post-extrusion expansion of the ink [16]. Stable printing is achieved by setting the translational speed of the print head $v$ to be close to the extrusion speed $C$, with which ink leaves the nozzle. At the same time, the height of the nozzle above the substrate $h$ is kept similar to $\alpha d_{in}$ (Figure 1a). Following Yuk and Zhao, we introduce the dimensionless nozzle speed $V^* \equiv v/c$ and height $H^* \equiv h/\alpha d_{in}$ and point out that for conventional DIW with circular cross-section filaments, both parameters are adjusted to be close to unity [15]. The extrusion speed $C$ may depend on the ink, nozzle and applied pressure. For inks that age, $C$ can change over time. Values for $C$ and $\alpha$ can be determined experimentally by printing simple test structures (Figure 7). In some embodiments, V* and H* as described herein correspond to V and H, respectively, as used throughout the description.

As model inks, we use two different materials: SE1700 (Dow Corning), a printable silicone elastomer in the polydimethylsiloxane family and Carbopol (Lubrizol), a microgel based on cross linked polyacrylic acid [17]. Both inks exhibit shear rate dependent viscosity (Figure 1b). This property allows for the ink to flow through the nozzle when pressure is applied and to "set" in the shape of a filament after the ink has exited the nozzle.

We start by noting that when H* or V* are close to or smaller than unity, non-circular cross section filaments are produced. They can be described as elliptical cylinder, ribbon, groove and discontinuous. The same combination of H* or V* produces a similar effect in both of our model inks (Figure 1c). To investigate how the interplay between, H* or V* influences which of the cross-sectional geometries is produced, we construct a phase diagram concentrating on the parameter space close to unity (Figure 1d). For these experiments, we use a nozzle with an outer diameter of 210 $\mu$m and 430 $\mu$m respectively and SE1700. The phase diagram obtained with Carbopol appears nearly identical and is presented in Figure 8.

When H* or V* are less than unity, the ink is squeezed and forced to deform between the nozzle and the substrate, which results in a filament flattened in the shape of a ribbon (Figure 1d, blue squares). Filaments are identified as ribbon when the ratio between the width and height of cross sections is larger than 1.5, preferably larger than 2. By increasing V* at a constant H* we observe a gradual transition to ellipse and circular cross sections (e.g. Figure 1d, boxed symbols ii and i and Figure 9). The transition between the ribbon and groove geometries is sharp and resembles a phase transition. Ribbon filaments become grooves when excess ink fully fills the space under the nozzle and starts to accumulate at the sides. Using an ink conservation argument, the condition for creating the groove filament can be expressed as follows (Equation 5):

$$ V^* = \frac{\pi}{4} \frac{din}{\alpha dout} \frac{1}{H^*} $$

The phase boundary predicted by Equation (5) is presented as a solid red line in Figure 1(d) and Figure 8 and is in good agreement with experimental observations of ribbon versus groove filaments.

Example 2: Post-extrusion modification of the filament cross section:

Post-extrusion modification of the filament cross section is demonstrated below. To do this, we use the nozzle as a stylus by setting to zero (no ink leaves the nozzle). Passing the stylus over a freshly printed (not yet polymerized) ribbon/ellipse filament of SE1700 silicone can create a groove in it (Figure 2). Interestingly, we observed that engraving deep grooves causes collapse of their walls leaving behind a lumen. The lumen persists even after thermal polymerization of the ink.

Example 3: Functional core-shell fibers:

Next, we combine ribbon and groove filaments to form functional core-shell fibers (Figure 3). As illustrated in Figure 3(a), grove filaments can aid patterning a functional core material by restricting its spreading to the confines of the grove. Combined with a ribbon filament printed on top, the grove filaments serve as cladding protecting the core. In the case of conductive fibers, the cladding functions as electrical insulation, in the case of optical fibers, it provides a step in refractive index.

Example 3: Optical fibers:

For optical fibers, we create a core by filling groove filaments with a high refractive index silicone (OE 6520, Dow Corning, RI = 1.54 compared to RI = 1.44 for SE 1700). The optical core cannot be printed as a continuous filament due to the low viscosity of the optical silicone. Instead, it is dosed (using a printing nozzle) inside the groove where it spreads. A ribbon filament is printed on top, acting as the optical seal. The entire fiber is then polymerized by heating. Optical fibers produced in this way display average attenuation of $0.72 \pm 0.06$ dBcm$^{-1}$ (Figure 10) for white light, which is similar to other polymer or hydrogel-based waveguides fabricated by molding or soft lithography [18] [19] [20].

Printed optical fibers remain functional when tied in a knot, or when stretched to at least 30 % tensile strain (Figure 3b). Strain of 30% results in $0.90 \pm 0.03$-fold change (decrease) of the transmitted optical power during the first stretch cycle. Within experimental error, strain induced attenuation remains unchanged during the 1000$^{th}$ stretch cycle.

Example 3: Electrical interconnects:

Similarly, electrical interconnects can be printed by filling groove filaments with a conductive material. Here we use compacted platinum microparticles as the conductive core while the groove and ribbon filaments act as electrical passivation (Figure 3c). Elastic interconnects produced in this way display average conductivity of $22 \pm 3.5$ Scm-1 which is similar to the conductivity observed in other metal microparticle based conductive composites [21].

Electrical interconnects remain conductive when stretched to at least 30 % tensile strain (Figure 3d). Strain of 30 % results in $6.80 \pm 1.86$-fold increase in resistance, which changes to $14.17 \pm 2.02$ after 1 000 strain cycles. Finally, we demonstrate that using the printing nozzle as a stylus, freeform microfluidic channels can be produced. Printed channels are observed to be free of obstructions (Figure 3e) and are able to support laminar flow (Figure 11). The three types of fiber presented here exhibit nearly linear elasticity (up to at least 30% tensile strain) with elastic moduli in the range of 2.28 to 3.00 MPa, which is consistent with the behavior of the constituent silicone elastomers (Figure 12).

Example 4: Optical fiber with steerable tip:

Fibers themselves may perform multi-modal sensing and actuating tasks. Here we present two examples where fibers of different modalities are integrated. In the first demonstration, we fabricate an optical fiber with steerable tip that may find applications in endoscope systems with adaptive illumination [22]. We print a composite fiber consisting of a microfluidic channel on top of an optical core (Figure 4a). By blocking one end of the microfluidic channel and connecting the other to a syringe, we create a pneumatic actuator. Because of the off-axis position of the microfluidic channel, inflation with air results in bending of the entire structure and deflection of the tip of the optical fiber (Figure 4b). The applied pressure can control the amount of tip deflection (Figure 4c).

Example 5: Thermal modulation:

In our second demonstration, we fabricate a system for delivering and monitoring thermal modulation on soft curvilinear surfaces (Figure 5a). A microfluidic channel is printed in the shape of a flower. It circulates a liquid that facilitates thermal exchange. In the center we position a packaged digital temperature sensor interfaced with printed elastic interconnects.

We apply our thermal actuator to the surface of a gelatin brain model. By flowing chilled ethanol at a rate of 1-2 mLmin-1 through the thermal exchange loop, we achieved a temperature drop of 3.06 °C in the brain model as reported by the integrated temperature sensor (Figure 5b). Focal cooling by only several degrees executed form the surface of the cortex has been shown to be effective for seizure suppression in several species including humans [23] [24] [25]. Thermal neuromodulation is a promising strategy for treating intractable focal epileptic seizures that remains less investigated due to lack of suitable implantable technology [26].

Summary of the Examples:

In summary, we demonstrate a strategy for rational control of the cross sectional geometry of filaments printed with SE1700 silicone and Carbopol hydrogel. We integrate filaments in core-shell functional fibers and freeform microfluidics. As an alternative method to co-extrusion with specialized co-axial nozzles, our approach relies on simple circular nozzles. Using groove

and ribbon filaments we demonstrate production of fibers with optical, electrical and microfluidic functionality. Freeform fibers may be integrated in webs of multi-modal sensors and actuators. We envisage applications in soft robots as well as in implantable systems to deliver multi-modal therapeutic programs to soft organs in the body.

Experimental Section:

*Ink Preparation:* Silicone elastomers, SE 1700 and OE 6520 (Dow Corning), are prepared by mixing catalyst and base at a ratio of 1:10 and 1:1 respectively, followed by degassing. Carbopol (EDT 2020, Lubrizol Corporation) is prepared by vigorous mixing in water at a concentration of 2% w/w, followed by the addition of NaOH until pH 7.0 is achieved.

*Electrical interconnects:* For electrical interconnects, conductive ink is fabricated by mixing Platinum powder (particle diameter 0.2-1.8l.lm, ChemPur, Germany) with tri(ethylene glycol) monoethyl ether (TGME, Merck KGaA) followed by sonication. The Platinum content in the suspension is around 15% by weight. The platinum suspension is deposited in groove filaments by ink-jet or by pipetting. The printed lines are then heated to 120 °C for 5 min to evaporate TGME leaving behind compacted dry Platinum powder inside groove filaments.

*Printing:* Printing is done using the 3D Discovery bio-printer from RegenHU, Switzerland. Print layouts are developed in the BIOCAD software (RegenHU). Studies of filament cross-sections are conducted with the SE 1700 silicone and the Carbopol microgel. We use a plastic conical nozzle with nominal inner diameter of 200 I.Im at the tip (corrected to an actual value of 210 $\mu$m following precise optical measurements). The pneumatic pressure is set at 5 and 1.2 bar for SE1700 and Carbopol respectively. Printing of the platinum ink is done with the ink-jet printing head of the 3D Discovery instrument. The optical silicone OE 6520 is deposited by the nozzle extrusion method, using 100 $\mu$m inner diameter, metal nozzles (Poly Dispersing Systems). In all cases, the substrate used for printing is glass treated with 2% sodium dodecyl sulfate (Merck KGaA) to form a debonding layer.

*Optical Fibers:* To create a grove in a freshly printed filament of SE 1700 the nozzle ($d_{in}$ = 210 $\mu$m, $d_{out}$ = 430 $\mu$m) is used as a stylus. The groove filament is then heat cured at 120° C for 45 minutes. One end of a cleaved silica optical fiber ($\varnothing$ 1501.im, Thor Labs) is placed inside the groove. Optical silicone (OE 6520) is then dispensed inside the groove to form the core of the optical fiber. This structure is heat cured at 120° C for 45 minutes. A final ribbon shaped filament of SE1700 silicone forms a seal, and is heat cured at 120° C for 45 minutes. Prior to each printing step, the structure is exposed to a brief oxygen plasma to improve interlayer adhesion. Finally, the free end of the silica optical fiber is coupled to a white light source (SCHOTT, KL 1500 electronic). Light transmission measurements are conducted by inserting the free end of the printed optical fiber into the opening of the integrating chamber of an optical powermeter (PM100D, S142C, Thor Labs). For stretching experiments, the ends of printed fibers are attached to the prongs of a caliper.

*Electrical Interconnects:* Here a groove filament is filled with platinum ink by ink-jetting and heated to 120° C for 5 minutes to remove the dispersing solvent. A ribbon shaped filament forms the electrical passivation. The two ends of the electrical interconnects are covered with, conductive epoxy (Epo-Tek H27D, Epoxy Technology) to which conventional electrical wires are attached. Printed electrical interconnects are stretched using a Dynamic Mechanical Analysis tester (SHIMADZU, EZ-SX) with a load cell of 20 N. During stretching, resistance measurements are performed using a potentiostat (AUTOLAB PGSTAT204, Metrohm).

*Microfluidic Channel:* Here, a nozzle ($d_{in}$ = 210 $\mu$m, $d_{out}$ = 430 $\mu$m) is used as a stylus passed through a freshly printed filament of SE 1700 silicone. In doing so, the walls of the groove shaped filament collapse forming a triangular shaped channel. The microfluidic channels are heat cured at 120° C for 45 minutes.

*Steerable Optical Fibers:* A microfluidic channel is printed directly on top of an optical fiber. The end of the microfluidic channel is sealed with a small droplet of RTV silicone (734 Clear, Dow Corning). The other end is coupled to a needle mounted on a 6 ml syringe. The junction between the syringe and the microfluidic channel is secured with additional blobs of silicone. Air pressure is applied by depressing the syringe piston using a syringe pump (kdScientific).

*Thermal Modulation System:* A microfluidic channel is printed in a flower shape. In the center of the flower we place a packaged digital temperature sensor (DS18B20, Maxim Integrated) interfaced with printed electrical interconnects. The microfluidic channel is coupled with silicone tubes (Fredenberg Medical, Mono Lumen Tubing). The whole system is placed upon gelatin (Sigma-Aldrich, G1890-100G) cast in the shape of a hemisphere (red food dye is added to the gelatin). A peristaltic pump (Bio-Rad, EP-1 Econo Pump) is used to pump chilled Ethanol (-25° C) through the microchannels at different flow rates.

*Imaging of Printed Structures:* A ZEISS Discovery V2.0 microscope is used for the imaging of filament and fiber cross sections. Other optical images are captured with a macro lens.

*Rheology measurements:* The rheology of SE1700 and Carbopol is investigated by oscillating plate rheometry (ARES, TA instruments, with parallel plates diameter of 8 mm). In order to quantify the shear dependent viscosity behavior of the samples, the shear rate is stepped between 1 and 100 rad/s.

*Statistics:* Measurements are quoted as averages from at least three independent samples and errors represent standard deviation.

**References:**

[1] J. A. Lewis, Advanced Functional Materials 2006, 16, 2193.
[2] D. Espinosa-Hoyos et al, Scientific Reports 2018, 8, 478.
[3] A. Sydney Gladman et al, Nat Mater 2016, 15, 413.
[4] N. Matsuhisa et al, Nature Materials 2017, 16, 834.
[5] M. S. Mannoor et al, Nano Letters 2013, 13, 2634.
[6] R. L. Truby et al, Advanced Materials 2018, 30, 1706383.
[7] J. T. Muth et al, Advanced Materials 2014, 26, 6307.
[8] J. U. Lind et al, Nat Mater 2017, 16, 303.
[9] Z. Zhijie et al, Advanced Materials, 0, 1707495.
[10] A. Canales et al, Nat Biotech 2015, 33, 277.
[11] K. Kroll et al, Progress in Biophysics and Molecular Biology 2017, 130, 212.

[12] A. D. Valentine T. A. et al, Advanced Materials 2017, 29, 1703817.

[13] L. Xinyue et al, Advanced Materials 2018, 30, 1704821.

[14] R. B. Rao et al, Advanced Materials 2005, 17, 289.

[15] H. Yuk, X. Zhao Advanced Materials 2018, 30, 1704028.

[16] R. I. Tanne, Journal of Polymer Science Part A-2: Polymer Physics 1970, 8, 2067.

[17] A. K. Grosskopf et al, ACS applied materials & interfaces 2018.

[18] J. Guo et al, Advanced Materials 2016, n/a.

[19] D. A. Chang-Yen et al, Lightwave Technol. 2005, 23, 2088.

[20] A. Ersen, M. Sahin, Journal of biomedical optics 2017, 22, 055005.

[21] S. Lee et al, Materials Today 2018, 21, 207.

[22] H. Bansal et al, Journal of Endourology 2011, 25, 317.

[23] K. M. Karkar et al, Epilepsia 2002, 43, 932.

[24] H. Kida et al, Clinical Neurophysiology 2012, 123, 1708.

[25] S. M. Rothman, Neurotherapeutics 2009, 6, 251.

[26] S. M. Rothman et al, Epilepsy & Behavior 2005, 7, 214.

[27] Drack et al, Adv. Mater. 2015, 27, 34-40.

[28] Valentine et al, Adv. Mater. 2017, 29, 1703817.

[29] Gerratt et al, Adv. Funct. Mater. 2015, 25, 2287-2295.

[30] Wehner et al, Nature, Volume 536, 451.

## Claims

1. Method for manufacturing an elastic and flexible fiber with a pre-determined non-circular cross-sectional geometry, the method comprising extrusion of an elastomer from a nozzle onto a substrate, wherein the pre-determined non-circular cross-sectional geometry of the fiber is determined by the height and velocity of the nozzle relative to the substrate.

2. Method according to preceding claim, wherein the elastomer is extruded onto the substrate as a continuous filament by a (preferably automated) translational relative motion of the nozzle relative to the substrate, followed by a hardening of the elastomer after extrusion to produce an elastic fiber.

3. Method according to any one of the preceding claims, wherein:

   a. the fiber has a maximum cross-sectional width of 10-2000 $\mu$m, preferably wherein the fiber has a maximum cross-sectional width of 50-1500 $\mu$m, more preferably about 300-1000 $\mu$m, and/or

   b. wherein the nozzle is essentially circular in cross-section, and preferably has a smallest internal diameter of 10-500 $\mu$m, preferably 100-300 $\mu$m, more preferably about 150-250 $\mu$m and preferably has a smallest outer diameter, greater than the internal diameter, of 20-1000 $\mu$m, preferably 100-700 $\mu$m, more preferably about 300-500 $\mu$m.

4. Method according to any one of the preceding claims, wherein the elastomer is an extrudable elastomer, allowing the elastomer to flow through the nozzle when pressure is applied and to harden into an elastic and flexible form after the elastomer is deposited on the substrate,
   wherein the elastomer preferably has a shear rate dependent viscosity and/or is a thermoplastic elastomer,
   wherein the elastomer is a preferably selected from the group consisting of silicone rubber (such as polydimethylsiloxane), a (preferably biocompatible) viscoelastic polymer, polyurethane rubber, a hydrogel or microgel (such as based on polyacrylic acid), colloidal suspension (such as containing silicate particles), a polymer precursor and/or a melt (such as wax).

5. Method according to any one of the preceding claims, wherein:

   a. the translational speed of the nozzle relative to the substrate is slower than the extrusion speed, with which the elastomer leaves the nozzle, and/or

   b. the distance between the nozzle and the substrate is less than the inner diameter of the nozzle.

6. Method according to any one of the preceding claims, wherein the fiber has an elliptical cross-sectional geometry or is a flattened cylinder (ribbon), preferably wherein the ratio of width to height of the cross-sectional geometry of the fiber is 1.5 or more, preferably 2 or more.

7. Method according to any one of the preceding claims, wherein the fiber comprises an elongated indentation along a length of the fiber (groove).

8. Method according to any one of the preceding claims, wherein:

   determining the velocity of the nozzle relative to the substrate comprises setting the velocity $V$ of the nozzle according to Equation 1:

$$V = \frac{v}{c}$$

wherein v is the translational speed of the nozzle relative to the substrate and *c* is the extrusion speed, with which the elastomer leaves the nozzle, and/or

wherein determining the height of the nozzle relative to the substrate comprises setting the height *H* of the nozzle according to Equation 2:

$$H = \frac{h}{\alpha \, din}$$

wherein *h* is a distance between the nozzle and the substrate, *din* is an inner diameter of the nozzle and $\alpha$ is 1 or a die-swelling factor that determines a post-extrusion expansion of the ink, wherein:

> when both *V* and *H* are more than about 1, the fiber has an essentially circular cross-sectional geometry, and when *V* and/or *H* are about 1 or less, the fiber has a non-circular cross-sectional geometry,
> wherein the elliptical or flattened cylinder (ribbon) form is obtained by setting *V* and *H* according to Equation 3:

$$V < \frac{1}{H^2}$$

> or wherein the elongated indentation along a length of the fiber (groove) is obtained by setting *V* and *H* according to Equation 4:

$$V < \frac{\pi}{4} \frac{din}{dout} \frac{1}{H}$$

> wherein *din* is an inner diameter of the nozzle, *dout* is an outer diameter of the nozzle.

9. Method according to any one of the preceding claims, wherein a nozzle or object of essentially the same dimensions is passed over the fiber after the elastomer is deposited on the substrate, and preferably before elastomer hardening, thereby removing elastomer (e.g. by engraving and/or suctioning) and producing an elongated indentation along a length of the fiber (groove).

10. Method according to the preceding claim, wherein said elongated indentation subsequently closes at the outer edge of the cross-sectional geometry of the fiber to form an elongated (microfluidic) lumen inside the fiber.

11. Method according to any one of the preceding claims, wherein the fiber comprises an elongated indentation along a length of the fiber (groove), and an elastic, and preferably flexible, electrically conductive material is positioned in the elongated indentation, followed by sealing said elongated indentation by depositing additional elastomer onto the fiber, preferably using the method of any one of the preceding claims, thereby sealing said electrically conductive material inside the fiber.

12. Method according to any one of the preceding claims, wherein the fiber comprises an elongated indentation along a length of the fiber (groove) and an elastic, and preferably flexible, light guiding material is positioned in the elongated indentation, followed by sealing said elongated indentation by depositing additional elastomer onto the fiber, preferably using the method of any one of the preceding claims, thereby sealing said light guiding material inside the fiber.

13. Elastic fiber with a non-circular cross-sectional geometry, produced using the method of any one of the preceding claims.

14. Elastic and flexible extruded fiber with a non-circular cross-sectional geometry and a maximum cross-sectional width of 10-2000 $\mu$m, preferably produced using the method of any one of the preceding claims, wherein the fiber comprises:

> a. a base element comprising an elongated indentation along a length of the base element (groove), wherein the base element is obtained by extruding an elastomer from a nozzle onto a substrate thereby forming an elongated indentation, and/or optional subsequent engraving of the extruded base element to form an elongated indentation,
> and
> b. at least one sealing element bound to the base element, wherein the sealing element is obtained by extruding an elastomer from a nozzle onto the base element, wherein the sealing element is positioned to form a sealed elongated lumen along a length of the fiber between the elongated indentation of the base element and the sealing element,
> wherein the lumen optionally comprises an elastic and flexible electrically conductive material or an elastic and flexible light guiding material.

15. Use of the elastic fiber according to any one of the preceding claims as:

- an optical fiber, when a light guiding material is sealed inside the fiber, produced according to claim 12,
- a microfluidic channel, when an elongated (microfluidic) lumen is present inside the fiber, produced according to claim 10,
- a pneumatic actuator, when an elongated lumen is present inside the fiber, produced according to claim 10, and pressure can be applied in the lumen, or
- a thermal exchange device, when an elongated lumen present inside the fiber, produced according to claim 10 is used to circulate a fluid with temperature different from that of the surroundings,
- an electrical interconnect, when an electrically conductive material is present inside the fiber, produced according to claim 11,
- A resistive strain sensor, when an electrically conductive material is present inside the fiber, produced according to claim 11.

**Fig. 1**

**Fig. 2**

**Fig. 3**

**Fig. 4**

**a**

**c**

**b**

**Fig. 5**

**a**

**b**

**Fig. 6**

**Fig. 7**

**a**

$$C = \frac{l}{\Delta t}$$

$\alpha d_{in}$

0.3 mm

0.5 cm

**b**

**Fig. 8**

**Fig. 9**

Constant H* = 1.6

Fig. 10

Fig. 11

Fig.12

a

b

| | Elastic Modulus, MPa |
|---|---|
| Optical fiber | 2.28 |
| Electrical interconnect | 2.70 |
| Microfluidic fiber | 3.00 |
| SE 1700 (Dow Corning) | ≈ 3.2 [1] |
| OE 6520 (Dow Corning) | 1.5 [2] |

**Fig. 13**

Europäisches
Patentamt

European
Patent Office

Office européen
des brevets

# EUROPEAN SEARCH REPORT

Application Number

EP 19 15 9938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/183806 A1 (DOW SILICONES CORP [US]; UNIV MICHIGAN REGENTS [US]) 4 October 2018 (2018-10-04) | 1-5,13 | INV. B29C48/05 B29C48/12 B29C64/106 B29C64/209 B33Y10/00 |
| Y | * abstract * * paragraph [0038] - paragraph [0040] * * paragraph [0022] * * paragraph [0024] * * claims 1-11 * * figures 1-6.6 * | 8 | ADD. B29C48/25 B29C48/02 |
| E | WO 2019/112976 A1 (MASSACHUSETTS INST TECHNOLOGY [US]) 13 June 2019 (2019-06-13) * the whole document * | 1-6,8,13 | |
| X | WO 2016/179242 A1 (HARVARD COLLEGE [US]) 10 November 2016 (2016-11-10) | 1 | |
| Y | * claims 1-93 * | 8 | |
| X | WO 2015/073944 A2 (HARVARD COLLEGE [US]) 21 May 2015 (2015-05-21) * abstract * * claims 1-29 * * figures 1-14c * | 1-6,8,13 | |
| X | US 2018/079139 A1 (WANG FEIYUE [CN] ET AL) 22 March 2018 (2018-03-22) * abstract * * paragraph [0012] - paragraph [0017] * * claims 1-25 * * figures 1-25 * | 1-6,8,13 | |

TECHNICAL FIELDS SEARCHED (IPC)

B29C
B33Y

~~The present search report has been drawn up for all claims~~

| Place of search | Date of completion of the search | Examiner |
|---|---|---|
| Munich | 19 July 2019 | Ngwa, Walters |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                    

& : member of the same patent family, corresponding document

EPO FORM 1503 03.82 (P04C01)

EP 3 702 126 A1

Europäisches Patentamt
European Patent Office
Office européen des brevets

Application Number

EP 19 15 9938

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6, 13(completely); 8(partially)

☐ The present supplementary European search report has been drawn up for those parts of the European patent application which relate to the invention first mentioned in the claims (Rule 164 (1) EPC).

25

Europäisches
Patentamt

European
Patent Office

Office européen
des brevets

**LACK OF UNITY OF INVENTION
SHEET B**

Application Number

EP 19 15 9938

The Search Division considers that the present European patent application does not comply with the
requirements of unity of invention and relates to several inventions or groups of inventions, namely:

```
1. claims: 1-6, 13(completely); 8(partially)

   Method for producing an elastic and flexible fiber
                        ---

2. claims: 7, 9, 10(completely); 8(partially)

   Method producing fibers with an enclosed passage
                        ---

3. claims: 11(completely); 14, 15(partially)

   Method for producing an electrically conductive fiber
                        ---

4. claims: 12(completely); 14, 15(partially)

   Method for producing an optical fiber
                        ---
```

## ANNEX TO THE EUROPEAN SEARCH REPORT
## ON EUROPEAN PATENT APPLICATION NO.

EP 19 15 9938

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2019

| Patent document cited in search report | | | Publication date | Patent family member(s) | | | Publication date |
|---|---|---|---|---|---|---|---|
| WO 2018183806 | A1 | | 04-10-2018 | NONE | | | |
| WO 2019112976 | A1 | | 13-06-2019 | NONE | | | |
| WO 2016179242 | A1 | | 10-11-2016 | AU | 2016257427 | A1 | 09-11-2017 |
| | | | | CN | 107921178 | A | 17-04-2018 |
| | | | | EP | 3291851 | A1 | 14-03-2018 |
| | | | | JP | 2018521710 | A | 09-08-2018 |
| | | | | US | 2018110901 | A1 | 26-04-2018 |
| | | | | WO | 2016179242 | A1 | 10-11-2016 |
| WO 2015073944 | A2 | | 21-05-2015 | EP | 3071939 | A2 | 28-09-2016 |
| | | | | US | 2016290880 | A1 | 06-10-2016 |
| | | | | US | 2019094089 | A1 | 28-03-2019 |
| | | | | WO | 2015073944 | A2 | 21-05-2015 |
| US 2018079139 | A1 | | 22-03-2018 | CN | 104097327 | A | 15-10-2014 |
| | | | | US | 2018079139 | A1 | 22-03-2018 |
| | | | | WO | 2016004642 | A1 | 14-01-2016 |

EPO FORM P0459

For more details about this annex : see Official Journal of the European Patent Office, No. 12/82

## REFERENCES CITED IN THE DESCRIPTION

**Patent documents cited in the description**

- WO 2017137945 A

**Non-patent literature cited in the description**

- **J. A. LEWIS.** *Advanced Functional Materials,* 2006, vol. 16, 2193
- **D. ESPINOSA-HOYOS et al.** *Scientific Reports,* 2018, vol. 8, 478
- **A. SYDNEY GLADMAN et al.** *Nat Mater,* 2016, vol. 15, 413
- **N. MATSUHISA et al.** *Nature Materials,* 2017, vol. 16, 834
- **M. S. MANNOOR et al.** *Nano Letters,* 2013, vol. 13, 2634
- **R. L. TRUBY et al.** *Advanced Materials,* 2018, vol. 30, 1706383
- **J. T. MUTH et al.** *Advanced Materials,* 2014, vol. 26, 6307
- **J. U. LIND et al.** *Nat Mater,* 2017, vol. 16, 303
- **Z. ZHIJIE et al.** *Advanced Materials,* vol. 0, 1707495
- **A. CANALES et al.** *Nat Biotech,* 2015, vol. 33, 277
- **K. KROLL et al.** *Progress in Biophysics and Molecular Biology,* 2017, vol. 130, 212
- **A. D. VALENTINE T. A. et al.** *Advanced Materials,* 2017, vol. 29, 1703817
- **L. XINYUE et al.** *Advanced Materials,* 2018, vol. 30, 1704821
- **R. B. RAO et al.** *Advanced Materials,* 2005, vol. 17, 289
- **H. YUK ; X. ZHAO.** *Advanced Materials,* 2018, vol. 30, 1704028
- **R. I. TANNE.** *Journal of Polymer Science Part A-2: Polymer Physics,* 1970, vol. 8, 2067
- **A. K. GROSSKOPF et al.** *ACS applied materials & interfaces,* 2018
- **J. GUO et al.** *Advanced Materials,* 2016
- **D. A. CHANG-YEN et al.** *Lightwave Technol.,* 2005, vol. 23, 2088
- **A. ERSEN ; M. SAHIN.** *Journal of biomedical optics,* 2017, vol. 22, 055005
- **S. LEE et al.** *Materials Today,* 2018, vol. 21, 207
- **H. BANSAL et al.** *Journal of Endourology,* 2011, vol. 25, 317
- **K. M. KARKAR et al.** *Epilepsia,* 2002, vol. 43, 932
- **H. KIDA et al.** *Clinical Neurophysiology,* 2012, vol. 123, 1708
- **S. M. ROTHMAN.** *Neurotherapeutics,* 2009, vol. 6, 251
- **S. M. ROTHMAN et al.** *Epilepsy & Behavior,* 2005, vol. 7, 214
- **DRACK et al.** *Adv. Mater.,* 2015, vol. 27, 34-40
- **VALENTINE et al.** *Adv. Mater.,* 2017, vol. 29, 1703817
- **GERRATT et al.** *Adv. Funct. Mater.,* 2015, vol. 25, 2287-2295
- **WEHNER et al.** *Nature,* vol. 536, 451